# EUROPÄISCHE PATENTSCHRIFT

(11) **EP 2 679 135 B1**
(45) Veröffentlichungstag und Bekanntmachung des Hinweises auf die Patenterteilung: **22.05.2019**
(21) Anmeldenummer: 12401126.3
(22) Anmeldetag: 25.06.2012
(51) Int. Cl.: A47L 15/42, D06F 39/00

(54) **Wasserführendes Haushaltgerät mit einem Speicherbehälter**
Water-guiding household device with a storage container
Appareil ménager transportant de l'eau doté d'un récipient de stockage

(43) Veröffentlichungstag der Anmeldung: 01.01.2014
(73) Patentinhaber: Miele & Cie. KG, 33332 Gütersloh (DE)
(72) Erfinder: Steinmeier, Ralph, 32052 Herford (DE); Wegener, Dirk, 33649 Bielefeld (DE)

(56) Entgegenhaltungen:
- EP-A1- 2 397 061
- EP-A2- 0 669 097
- EP-A2- 0 861 630
- EP-A2- 2 368 478
- WO-A1-2009/027320

## Beschreibung

Die Erfindung betrifft ein wasserführendes Haushaltgerät, insbesondere eine Geschirrspülmaschine, mit einem Behandlungsraum, mit einer Enthärtungseinrichtung für Frischwasser, welcher eine Regeneriereinrichtung mit einem Solevorrat zugeordnet ist, und mit einem Speicherbehälter zur Speicherung von Frischwasser und Reinigungsflotte, wobei der Speicherbehälter wärmeleitend zum Behandlungsraum angeordnet ist und wenigstens ein Flottenvolumen fasst, sowie mit mindestens einem Mittel zum Überführen von Reinigungsflotte aus dem Behandlungsraum in das Flottenvolumen.

Aus der DE 197 58 061 C2 ist eine Geschirrspülmaschine bekannt, bei der wärmeleitend zu einem Behandlungsraum ein Vorratsbehälter angeordnet ist. Ein solcher Behälter kann mit kalter Flüssigkeit (Frischwasser oder enthärtetes Weichwasser) gefüllt werden und dadurch während eines Trocknungsprogrammabschnitts die Kondensation von warmer, feuchter Luft an der benachbarten Wand des Behandlungsraums unterstützen. Hierdurch wird einerseits die Trocknungsdauer verkürzt, andererseits kann eine Energieeinsparung erreicht werden, wenn das Wasser aus dem Behälter in einem Programmabschnitt verwendet wird, in dem erwärmte Flüssigkeit benötigt wird. Werden zwei Programme schnell hintereinander ausgeführt, besitzt das Wasser im zweiten Programm die Wärmeenergie, die es aus dem ersten Programm beim Trocknen gespeichert hat. Bei längeren Pausen zwischen zwei Programmen besitzt das Wasser Raumtemperatur, welche in der Regel höher ist als die Temperatur von Wasser, welches frisch aus der Leitung kommt. Neben der Unterstützung der Kondensation kann das Wasser auch Wärmeenergie zum Ende wasserführender Programmabschnitte speichern.

Die WO2009/027320 offenbart ebenfalls eine Geschirrspülmaschine, bei der wärmeleitend zu einem Behandlungsraum ein Vorratsbehälter angeordnet ist. Dieser ist einerseits mit Frischwasser befüllbar, andererseits kann auch Reinigungsflotte mit der Umwälzpumpe aus dem Behandlungsraum in den Vorratsbehälter gefördert werden.

Es ist in wasserführenden Haushaltgeräten bekannt, bei Geschirrspülmaschinen sogar üblich, Enthärtungseinrichtungen einzusetzen, damit einige wasserführende Programmabschnitte mit enthärteter Wasch- bzw. Spülflüssigkeit ausgeführt werden können. In diesen Enthärtungseinrichtungen ersetzt ein lonenaustauscherharz beim durchlaufenden Wasser die härtebildenden Ca²⁺- und Mg²⁺-Ionen gegen eine äquivalente Menge Nationen. Wenn das lonenaustauscherharz der Enthärtungseinrichtung erschöpft ist, muss es durch Salzsole regeneriert werden. Hierzu wird ein Solevorrat verwendet, welcher in einer Regeneriereinrichtung aus Salz und Wasser erzeugt und durch das lonenaustauscherharz geleitet wird. Um eine gewünschte Solekonzentration zu erreichen, wird ein mit Salz gefüllter Behälter von einer definierten Wassermenge, einem Regeneriervolumen, durchflossen. Dieses wird entweder aus einem separaten Behälter vordosiert oder mengengesteuert über eine Wassermengenmesseinrichtung zugegeben, beispielsweise über einen Flügelradzähler.

Die EP0861630A2 beschreibt eine Geschirrspülmaschine mit einem Speicherbehälter, welcher zusätzlich zu einem Flottenvolumen, welches zur Speicherung von Frischwasser dient, ein Regeneriervolumen fasst, welches zur Erzeugung des Solevorrats dient.

Der Erfindung stellt sich das Problem, bei einem wasserführenden Haushaltsgerät der eingangs genannten Art die Funktion des Speicherbehälters weiter zu verbessern.

Erfindungsgemäß wird dieses Problem durch ein wasserführendes Haushaltsgerät mit den Merkmalen des Patentanspruchs 1 gelöst. Vorteilhafte Ausgestaltungen und Weiterbildungen der Erfindung ergeben sich aus den nachfolgenden Unteransprüchen.

Das erfindungsgemäße wasserführende Haushaltgerät kann beispielsweise eine Waschmaschine, ein Waschtrockner oder vorzugsweise eine Geschirrspülmaschine sein. Es weist einen Behandlungsraum, eine Enthärtungseinrichtung und einen Speicherbehälter auf. Der Enthärtungseinrichtung ist eine Regeneriereinrichtung mit einem Solevorrat zugeordnet. Der Speicherbehälter ist einerseits dazu ausgebildet, Frischwasser, also noch unbenutztes Leitungswasser, d.h. in einem wasserführenden Programmabschnitt des Haushaltgeräts zum Spülen oder Waschen noch nicht eingesetzte Wasch- oder Spülflüssigkeit, zu bevorraten. Andererseits ist der Speicherbehälter ebenfalls dazu eingerichtet, Reinigungsflotte, also bereits in einem wasserführenden Programmabschnitt des Haushaltgeräts zum Spülen oder Waschen eingesetzte Wasch- oder Spülflüssigkeit, zu bevorraten. Vorzugsweise kann der Speicher darüber hinaus auch eine Mischung aus Frischwasser und Reinigungsflotte aufnehmen. Der Speicherbehälter ist wärmeleitend zum Behandlungsraum angeordnet. Dadurch kann der Speicherbehälter, wenn er mit vergleichsweise kalter Flüssigkeit befüllt ist, die Kondensationstrocknung im Haushaltgerät unterstützen.

Erfindungsgemäß fasst der Speicherbehälter einen ersten Bereich, den man als Flottenvolumen bezeichnen kann, sowie einen zweiten Bereich, den man als Regeneriervolumen bezeichnen kann. Das Regeneriervolumen dient zur Erzeugung des Solevorrats, d.h. ermöglicht die Bevorratung von Frischwasser, welches zur Regeneriereinrichtung geleitet werden kann und dort zur Erzeugung des Solevorrats verwendet wird.

Dadurch, dass der Speicherbehälter zusätzlich zum Flottenvolumen ein Regeneriervolumen fasst, welches zur Erzeugung des Solevorrats dient, wird die Füllmenge des Behälters vergrößert. Es steht somit mehr kaltes Wasser zur Abkühlung einer Wand des Behandlungsraums zur Verfügung, wodurch eine verbesserte Kondensationstrocknungswirkung erreicht wird. Außerdem werden Bauteilkosten für einen separaten Behälter zur Aufnahme des Regeneriervolumens eingespart. Dabei ist es zweckmäßig, wenn das Flottenvolumen wenigstens eine Teilmenge der in einem wasserführenden Programmabschnitt benötigten Flüssigkeitsmenge umfasst, vorzugsweise fasst das Flottenvolumen mindestens 2 Liter, insbesondere 2,5 bis 3,5 Liter. Das Wasser kann dann nach der Unterstützung der Kondensation weiter verwendet werden. Hierbei kann die vom gespeicherten Wasser aufgenommene Wärmeenergie für einen späteren, etwa den unmittelbar nachfolgenden Spül- oder Waschprozess genutzt werden.

Ein Spül- oder Waschprogramm, mit dem das Haushaltgerät betrieben wird, weist typischerweise mehrere Programmabschnitte auf, etwa die Programmabschnitte Vorspülen, Reinigen, Zwischenspülen, Klarspülen, Trocknen. Nach Abschluss eines Spülprogramms kann das saubere Spülgut entnommen und das Haushaltgerät für ein nachfolgendes Spülprogramm neu bestückt werden.

Das Haushaltgerät weist erfindungsgemäß darüber hinaus zumindest ein Mittel zum Überführen von Reinigungsflotte aus dem Behandlungsraum in das Flottenvolumen auf. Reinigungsflotte kann somit in diesen ersten Bereich des Speicherbehälters geleitet und dort bevorratet werden und in einem nachfolgenden Spül- oder Waschprogramm wiederverwendet werden, insbesondere kann nach dem Programmabschnitt Klarspülen gespeichertes Klarspülwasser in einem nachfolgenden Spülprogramm im Programmabschnitt Vorspülen eingesetzt werden. Hierdurch kann sowohl Wasser als auch Energie eingespart werden. Erfindungsgemäß kann somit sowohl Frischwasser als auch Reinigungsflotte im Speicherbehälter, insbesondere im Flottenvolumen, gespeichert werden. Frischwasser kann dabei insbesondere Weichwasser, nicht enthärtetes Leitungswasser oder eine Mischung daraus sein.

Typischerweise findet in einem oder mehreren Programmabschnitten eines Spül- oder Waschprogramms grundsätzlich eine Frischwasserspeicherung statt. Ob stattdessen, vorzugsweise jedoch zusätzlich dazu in einem Programmabschnitt eine Bevorratung von Reinigungsflotte vorgenommen wird, kann programmabhängig oder abhängig von mindestens einem gemessenen Parameter automatisch bestimmt werden. Die verschiedenen Optionen können softwaretechnisch eingestellt werden.

Darüber hinaus weist der Speicherbehälter mindestens ein Begrenzungsmittel zur Trennung des Flottenvolumens vom Regeneriervolumen auf. Dieses Begrenzungsmittel ist so ausgebildet, dass ein Übertritt von Flüssigkeit aus dem Flottenvolumen in das Regeneriervolumen verhindert wird. Damit ist ausgeschlossen, dass zur Erzeugung des Solevorrats ungeeignete Reinigungsflotte, welche aus dem Behandlungsraum in das Flottenvolumen geleitet wurde, in das Regeneriervolumen gelangen kann. Vorzugsweise sind der Speicherbehälter und/oder das mindestens eine Begrenzungsmittel jedoch so ausgestaltet, dass ein Übertritt von Flüssigkeit dagegen in umgekehrter Richtung, nämlich vom Regeneriervolumen in das Flottenvolumen, möglich ist. Vorzugsweise kommt es zu einem Übertritt von Flüssigkeit vom Regeneriervolumen in das Flottenvolumen, sobald das Regeneriervolumen seinen maximalen Füllstand erreicht hat.

Hierzu weist der Speicherbehälter vorzugsweise einen, dem Regeneriervolumen zugeordneten Überlauf auf, über den Flüssigkeit aus dem Regeneriervolumen in das Flottenvolumen gelangen kann. Somit fließt Frischwasser vom Regeneriervolumen genau dann in das Flottenvolumen, wenn dem Regeneriervolumen Frischwasser zugeführt wird, jedoch das Regeneriervolumen bereits vollständig gefüllt ist.

Für das Befüllen des Speicherbehälters mit Frischwasser ist vorzugsweise ein Einlass im Bereich des Regeneriervolumens angeordnet, so dass über den Einlass das Regeneriervolumen befüllt werden kann. Aufgrund des dem Regeneriervolumen zugeordneten Überlaufs ist der Einlass jedoch auch geeignet, eine Befüllung des Flottenvolumens mit Frischwasser zu bewirken. Insbesondere ist dieser Einlass derart angeordnet, dass die Befüllung des Speicherbehälters mit Frischwasser stets mit der Befüllung des Regeneriervolumens beginnt, bzw. dass Frischwasser erst dann in das Flottenvolumen gelangt, wenn das Regeneriervolumen komplett gefüllt ist, d.h. seinen maximalen Füllstand erreicht hat und das Frischwasser über den dem Regeneriervolumen zugeordneten Überlauf in das Flottenvolumen überläuft. Dadurch dass das Flottenvolumen nicht lediglich als Speicher für Reinigungsflotte verwendet wird, sondern regelmäßig mit Frischwasser beaufschlagt wird, kann einer Keimbildung im Speicherbehälter, insbesondere im Flottenvolumen entgegengewirkt werden.

Der Speicherbehälter weist vorzugsweise einen, dem Flottenvolumen zugeordneten Überlauf auf, über den Flüssigkeit aus dem Flottenvolumen in den Behandlungsraum gelangen kann. Dies geschieht, wenn dem Flottenvolumen Flüssigkeit, d.h. Frischwasser oder Reinigungsflotte zugeführt wird, jedoch das Flottenvolumen bereits vollständig gefüllt ist. In einer besonders vorteilhaften Ausführungsform weist der Speicherbehälter einen ersten, dem Regeneriervolumen zugeordneten Überlauf sowie einen zweiten, dem Flottenvolumen zugeordneten Überlauf auf, wobei der dem Flottenvolumen zugeordnete zweite Überlauf bei bestimmungsgemäßer Aufstellung des Haushaltgeräts in geringerer Höhe angeordnet ist als der dem Regeneriervolumen zugeordnete erste Überlauf. Auf diese Weise ist mit besonders einfachen Mitteln und unter Vermeidung eines separaten Behälters erreicht, dass sowohl Frischwasser als auch Reinigungsflotte gespeichert werden kann, ohne dass Reinigungsflotte sich mit für die Regenerierung verwendeten Frischwassers mischt. Dadurch dass der Zulauf des Frischwassers in das Flottenvolumen, welcher über den ersten, dem Regeneriervolumen zugeordneten Überlauf erfolgt, oberhalb des maximalen Füllstandes des Flottenvolumens angeordnet ist, also beim Einlauf eine Frischwasserspülung "von oben" stattfindet, wird zudem eine vergleichsweise gute Speicherreinigungswirkung erzielt.

In einer weiteren vorteilhaften Ausführungsform besitzt der Speicherbehälter einen ersten Auslauf, über den das Flottenvolumen entleerbar oder wenigstens annähernd vollständig entleerbar ist. Die Entleerung wird dabei vorzugsweise mittels Schwerkraft bewirkt. Zur Entleerung kann ein dem Auslauf nachgeschaltetes Ventil vorgesehen sein. Wenn dieses eingespart werden soll, kann der erste Auslauf durch einen Saugheber gebildet werden. Vorzugsweise ist der erste Auslauf über eine Entleerungsleitung mit einem Druckstutzen einer an den Sammeltopf angeschlossenen Pumpe verbunden. Beim Entleeren des Flottenvolumens des Speicherbehälters aus dem ersten Auslass kann die Flüssigkeit somit über den Druckstutzen der Pumpe in den Sammeltopf fließen.

Mittels dieser an den Sammeltopf angeschlossenen Pumpe kann umgekehrt Flüssigkeit, insbesondere Reinigungsflotte aus dem Sammeltopf in den Speicherbehälter, nämlich in das Flottenvolumen gefördert werden. Dies geschieht vorzugsweise ebenfalls über die Entleerungsleitung, d.h. die Leitung, über die die Entleerung des Flottenvolumens erfolgt. Die Pumpe und die Entleerungsleitung stellen somit Mittel zum Überführen von Reinigungsflotte aus dem Behandlungsraum in das Flottenvolumen dar. Bei der Pumpe handelt es sich vorzugsweise um die Umwälzpumpe des Haushaltgeräts, d.h. um dieselbe Pumpe, mit der die Spülflüssigkeit zu den Sprüheinrichtungen gefördert wird. Auf diese Weise werden Bauteilkosten eingespart und eine kompakte Anordnung erreicht. Es ist jedoch auch möglich, zusätzlich zur Umwälzpumpe eine weitere, separate Pumpe vorzusehen, mit der Reinigungsflotte aus dem Sammeltopf in den Speicherbehälter, nämlich das Flottenvolumen gefördert wird. Auf diese Weise kann eine Umwälzung von Reinigungsflotte einerseits und das Einlassen oder Auslassen von Reinigungsflotte in das oder aus dem Flottenvolumen andererseits unabhängig voneinander und insbesondere gleichzeitig erfolgen. Dies erlaubt eine größere Flexibilität in der Programmgestaltung und macht eine Verringerung der Spül- oder Waschdauer möglich.

Gemäß einer weiteren Ausführungsform weist der Speicherbehälter einen zweiten Auslauf auf. Dieser ist im Bereich des Regeneriervolumens angeordnet. Über den zweiten Auslauf ist insbesondere lediglich das Regeneriervolumen entleerbar oder wenigstens annähernd vollständig entleerbar. Die im Regeneriervolumen bevorratete Frischwassermenge wird dabei über einen Salzbehälter zu dem in der Regeneriereinrichtung befindlichen Harzbett geleitet. Mit dieser Anordnung ist durch das definierte Regeneriervolumen die zur Soleerzeugung notwendige Wassermenge ohne weitere Messeinrichtungen genau dosierbar. Ein solches Verfahren ist wesentlich genauer, als die Messung der in den Salzbehälter einlaufenden Wassermenge durch einen Flügelradzähler.

Der Speicherbehälter, d.h. das Flottenvolumen kann wie beschrieben entweder mit Frischwasser, insbesondere mit Weichwasser oder nicht enthärtetem Leitungswasser, mit Reinigungsflotte oder mit einer Mischung dieser Flüssigkeiten gefüllt werden. Alle Varianten bieten verschiedene Vorteile, die den Beschreibungen der jeweiligen Ausführungsbeispiele zu entnehmen sind.

Außerdem kann dem Speicherbehälter ein Füllstandssensor zugeordnet sein. Dieser bietet eine zusätzliche Sicherheit, wenn ein üblicherweise eingesetzter Wassermengensensor nicht ordnungsgemäß arbeitet.

In einer vorteilhaften Ausführungsform einer Geschirrspülmaschine wird eine zur Umwälzung von Spülflüssigkeit vorgesehene Umwälzpumpe während der Entleerung des Speicherbehälters mit einer ansteigenden Drehzahl betrieben. Da das Entleeren des Speicherbehälters länger als der direkte Frischwasserzulauf in den Behandlungsraum dauert, wäre eine Verlängerung der Programmlaufzeit zu erwarten. Dies kann verhindert werden, wenn bereits mit dem Entleeren des Speicherbehälters die Umwälzpumpe mit geringer, an das Flüssigkeitsniveau im Behandlungsraum angepasster Drehzahl zu laufen beginnt und anschließend eine Drehzahlsteigerung erfolgt. In einer ersten Variante kann die Drehzahlsteigerung niveaugesteuert vorgenommen werden. Hierzu wird in vorteilhafter Weise eine Pumpe mit drehzahlregelbarem Antrieb eingesetzt. Dann kann aus der Regelabweichung des Antriebs das Niveau im Sammeltopf ermittelt werden und die Drehzahl angepasst gesteigert werden. Eine einfache Variante, welche für einen drehzahlsteuerbaren Pumpenantrieb geeignet ist, zeichnet sich durch eine zeitgesteuerte Drehzahlsteigerung aus. Geeignete Einschaltzeiten und Drehzahlanstiege, linear oder nichtlinear, können hierzu in Versuchen ermittelt werden.

Es ist auch vorteilhaft, wenn dem ersten Auslauf strömungsmäßig ein Sieb vorangestellt ist. Hierdurch wird verhindert, dass sich Kalk in den Ventilen ablagert.

Gemäß einem besonders vorteilhaften Ausführungsbeispiel weist das Haushaltgerät zusätzlich zu dem ein Flottenvolumen und ein Regeneriervolumen umfassenden Speicherbehälter einen Zusatzspeicher auf, welcher ergänzend zur Speicherung von Frischwasser und Reinigungsflotte dient. Der Zusatzspeicher ist dabei fluidtechnisch mit dem Flottenvolumen verbunden. Durch den Zusatzspeicher kann eine noch größere Flüssigkeitsmenge bevorratet werden, wodurch eine noch größere Einsparung von Energie und Wasser erreicht werden kann.

Vorzugsweise ist der Speicherbehälter an einer ersten Seitenwand des Behandlungsraums und der Zusatzspeicher an einer zweiten, insbesondere der ersten Seitenwand gegenüberliegenden Seitenwand des Behandlungsraums angeordnet. Hierdurch kann eine besonders große Kondensationsfläche bereitgestellt und die thermische Energie aus dem Behandlungsraum besonders effizient auf die bevorratete Flüssigkeit übertragen werden.

Wie das Flottenvolumen des Speicherbehälters ist der Zusatzspeicher vorzugsweise ebenso dazu geeignet, sowohl Frischwasser, insbesondere Weichwasser oder enthärtetes Leitungswasser, als auch Reinigungsflotte zu bevorraten.

Der Zusatzspeicher weist vorzugsweise einen Auslauf auf, über den der Zusatzspeicher entleerbar oder wenigstens annähernd vollständig entleerbar ist. Der Auslauf des Zusatzspeichers ist vorzugsweise mit dem Auslauf des Flottenvolumens über eine Verbindungsleitung derart miteinander verbunden, dass sich die absoluten Flüssigkeitsniveaus im Zusatzspeicher und im Flottenvolumen des Speicherbehälters durch die Verbindungsleitung schwerkraftbedingt ausgleichen. Anders ausgedrückt verhalten sich das Flottenvolumen und der Zusatzspeicher nach dem Prinzip kommunizierender Röhren.

Die Verbindungsleitung mündet vorzugsweise in die Entleerungsleitung des Flottenvolumens, so dass ein Ablassen der im Flottenvolumen und im Zusatzspeicher gespeicherten Flüssigkeit über einen gemeinsamen Abschnitt der Entleerungsleitung erfolgt. Ein gemeinsames Speicherablaufventil ist vorzugsweise in dem gemeinsamen Abschnitt der Entleerungsleitung angeordnet. Hierdurch wird eine besonders kompakte und materialsparende Anordnung bereitgestellt.

Der Zusatzspeicher wird vorzugsweise stets gemeinsam mit dem Flottenvolumen des Speicherbehälters gefüllt und/oder abgelassen. Der Verfahrensablauf unterscheidet sich dabei nicht von dem oben beschriebenen Verfahrensablauf ohne Zusatzspeicher. Die Befüllung mit Frischwasser erfolgt, in dem wie bereits beschrieben, Frischwasser in das Regeneriervolumen des Speicherbehälters eingelassen und bei vollständig gefülltem Regeneriervolumen über den ersten Überlauf in das Flottenvolumen gelangt. Aufgrund der Verbindung des Auslaufes des Flottenvolumens und des Auslaufes des Zusatzspeichers füllt sich dabei ebenfalls der Zusatzspeicher, wobei die Pegel des Zusatzspeichers und des Flottenvolumens auf einem übereinstimmenden absoluten Flüssigkeitsniveau gemeinsam steigen. Das Ablassen der im Flottenvolumen und im Zusatzspeicher gespeicherten Flüssigkeit, etwa Frischwasser oder Reinigungsflotte, in den Sammeltopf erfolgt bei geöffnetem gemeinsamen Speicherablaufventil über den gemeinsamen Abschnitt der Entleerungsleitung in den Druckstutzen einer Pumpe, etwa der Umwälzpumpe, welche an den Sammeltopf angeschlossen ist. Umgekehrt erfolgt die Befüllung des Flottenvolumens und des Zusatzspeichers mit Reinigungsflotte mittels der Pumpe über die Entleerungsleitung und über den Ablauf des Flottenvolumens in das Flottenvolumen und über den Ablauf des Zusatzspeichers in den Zusatzspeicher.

Verschiedene Ausführungsbeispiele der Erfindung sind in den Zeichnungen rein schematisch dargestellt und werden nachfolgend näher beschrieben.

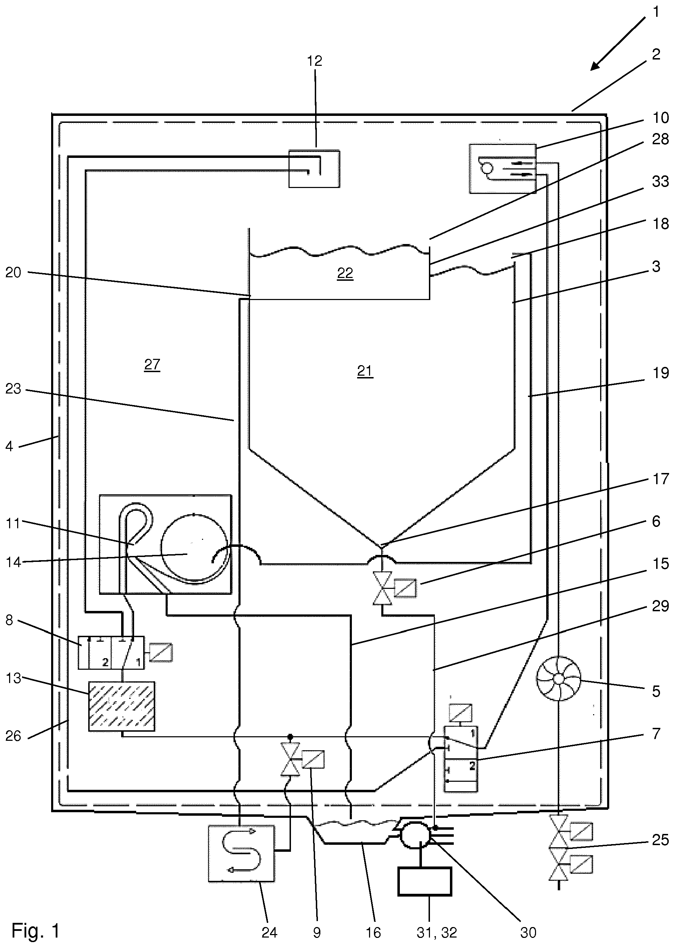

Die Figuren 1 und zeigen unterschiedliche Ausführungsbeispiele eines erfindungsgemäß gestalteten Haushaltgeräts anhand einer Geschirrspülmaschine. Dabei sind nach Art eines Flussdiagramms aufgebaute Schemaskizzen mit den für den Wasserlauf der Geschirrspülmaschine wichtigen Bauteilen dargestellt.

Die in Figur 1 dargestellte Spülmaschine 1 besitzt einen durch einen Kasten symbolisierten Spülraum 2 als Behandlungsraum. Neben diesem ist in bekannter Weise ein Speicherbehälter 3 angeordnet. Der Speicherbehälter 3 steht in wärmeleitender Verbindung mit dem Spülraum 2. Er ist Bestandteil einer durch einen gestrichelten Kasten symbolisierten Wassertasche 4. Weitere in die Wassertasche 4 integrierte Bauteile sind ein Flügelradzähler 5, vier Ventile, nämlich ein Speicherauslaufventil 6, ein Umschaltventil 7 zur Steuerung der Spülwasserhärte (siehe EP 1 080 681 A2), ein weiteres Umschaltventil 8 und ein Regenerierventil 9, drei Wasserschutzeinrichtungen 10 bis 12 und ein Harzbehälter 13 einer Enthärtungseinrichtung. Die Wassertasche 4 ist fluidtechnisch über die zweite Wasserschutzeinrichtung 11 und über den Speicherbehälter 3 mit dem Spülraum 2 verbunden. Wasserschutzeinrichtungen werden durch freie Fließstrecken gebildet, die den Vorschriften der DVGW genügen und ein Rücksaugen von Spülflüssigkeit in die Leitungen der Hauswasserversorgung verhindern sollen. Die Verbindung über die zweite Wasserschutzeinrichtung 11 mündet in eine Spülraumbelüftung 14 im unteren Bereich einer Spülraumseitenwand 27. Die Verbindung über den Speicherbehälter 3 ist eine Entleerungsleitung 29 und mündet in den Druckstutzen einer an den den Spülraum 2 nach unten abschließenden Sammeltopf 16 verbundene Pumpe 30. Der erste Auslauf 17 des Speicherbehälters 3 bzw. Flottenvolumens 21 über die Entleerungsleitung 29 ist durch das Speicherablaufventil 6 steuerbar. Darüber hinaus ist der Speicherbehälter 3 bzw. Flottenvolumen 21 mit einem (zweiten) Überlauf 18 versehen, der über eine Leitung 19 in Form einer Schlauchverbindung oder eines Kanals auch in die Spülraumbelüftung 14 mündet. Neben dem Auslauf 17 besitzt der Speicherbehälter 3 einen zweiten Auslauf 20 im Bereich des Regeneriervolumens 22. Dieser zweigt seitlich aus dem Speicherbehälter 3 ab und ist so angeordnet, dass Regeneriervolumen 22 über ihn zumindest näherungsweise vollständig entleerbar ist. Das Regeneriervolumen 22 stellt auf diese Weise eine definierte Wassermenge bereit und ist durch eine Leitung 23 in Form einer Schlauchverbindung oder eines Kanals einem Salzbehälter 24 einer Regeneriereinrichtung zuleitbar. Die Entleerung des Regeneriervolumens 22 wird durch das Regenerierventil 9 gesteuert, welches dem Salzbehälter 24 strömungsmäßig nachgeschaltet ist. Bei geöffnetem Regenerierventil 9 durchfließt die im Salzbehälter 24 aus Salz und Wasser erzeugte Sole den Harzbehälter 13, regeneriert das lonenaustauscherharz und fließt über die zweite Wasserschutzeinrichtung 11 in den Sammeltopf 16 und damit in den unteren Bereich des Spülraums 2. Hierzu muss das zweite Umschaltventil 8 sich in Stellung "1" befinden. Anschließend wird die Sole aus dem lonenaustauscherharz mit Wasser ausgespült, hierzu ist das Wassereinlaufventil 25 geöffnet und beide Umschaltventile 7 und 8 befinden sich in Stellung "1".

Der Wassereinlauf zum Spülraum 2 oder zum Speicherbehälter 3 erfolgt aus der Hauswasserversorgung über ein Wassereinlaufventil 25. Mit einem Flügelradzähler 5 wird die zugelaufene Wassermenge ermittelt. Es schließt sich die erste Wasserschutzreinrichtung 10 an. Über das erste Umschaltventil 7 wird das Wasser entweder dem Harzbehälter 13 (Stellung "1") oder direkt dem Speicherbehälter 3 (Stellung "2") zugeleitet. Das zweite Umschaltventil 8 leitet das enthärtete Weichwasser entweder dem Sammeltopf 16 (in Stellung "1", über die zweite Wasserschutzeinrichtung 11) oder dem Speicherbehälter 3 (in Stellung "2", über die dritte Wasserschutzeinrichtung 12) zu.

Um das Flottenvolumen 21 des Speicherbehälters 3 nach einem wasserführenden Programmabschnitt mit dabei verwendeter Reinigungsflotte zu befüllen, wird die Pumpe 30 eingeschaltet und die Reinigungsflotte aus dem Sammeltopf 16 bei geöffnetem Speicherablaufventil 6 über die Entleerungsleitung 29 durch den ersten Auslass 17 in das Flottenvolumen 21 gefördert. Dabei kann als Pumpe 30 insbesondere die Umwälzpumpe verwendet werden. Die (nicht dargestellte) Wasserweiche wird in diesem Ausführungsbeispiel zur Flottenspeicherbefüllung in die entsprechende Zuflussrohrstellung mit der Entleerungsleitung (Bypass) verstellt.

In Abhängigkeit der Wassermenge stellt sich ein bestimmter Füllstand im Flottenvolumen 21 ein. Dadurch dass der zweite Überlauf 18 auf einem niedrigeren Höhenniveau angeordnet ist als der erste Überlauf 28, ist dabei sichergestellt, dass die Reinigungsflotte nicht in das Regeneriervolumen gelangt.

Durch die vorbeschriebene Ausbildung der Wassertasche 4 sind folgende Wasserwege möglich:
1. Befüllung des Speicherbehälters 3 mit Frischwasser - erstes Umschaltventil 7 in Stellung "2", zweites Umschaltventil 8 beliebig;
2. Befüllung des Speicherbehälters 3 mit enthärtetem Weichwasser - erstes Umschaltventil 7 in Stellung "1", zweites Umschaltventil 8 in Stellung "2";
3. Befüllung des Flottenvolumens 21 des Speicherbehälters 3 mit Reinigungsflotte - geöffnetes Speicherablaufventil 6, eingeschaltete Pumpe 30;
4. Direkte Befüllung des Spülraums 2 mit enthärtetem Weichwasser - beide Umschaltventile 7 und 8 in Stellung "1";
5. Direkte Befüllung des Spülraums 2 mit Frischwasser - erstes Umschaltventil 7 in Stellung "2", wahlweise Überfüllung des Speicherbehälters 3 oder geöffnetes Speicherablaufventil 6;
6. Regenerieren des lonenaustauscherharzes - Regeneriervolumen 22 gefüllt, Regenerierventil 9 geöffnet, Umschaltventil 7 in Stellung "2", Umschaltventil 8 in Stellung "1", über zweite Wasserschutzeinrichtung 11;
7. Entleeren des Flottenvolumens 21 in den Spülraum 2 - Speicherablaufventil 6 geöffnet.

Um eine direkte Befüllung des Spülraums 2 mit Frischwasser unter Umgehung des Speicherbehälters 3 zu ermöglichen, kann die als Schlauchverbindung oder als Kanal ausgeführte Leitung 26 vom ersten Umschaltventil 7 (Stellung "2") nicht zur dritten Wasserschutzeinrichtung 12, sondern zur zweiten Wasserschutzeinrichtung 11 verlegt sein (nicht in der Figur 1 dargestellt). Dadurch werden Kalkablagerungen im Speicherbehälter 3 verhindert. Es ist dann allerdings die Variante 1. (Befüllung des Speicherbehälters 3 mit Frischwasser) nicht durchführbar. Üblicherweise wird dem enthärteten Weichwasser zur Glasschonung (sehr weiches Wasser löst Kalzium-Ionen aus dem Glas und macht es blind) ein Frischwasseranteil zugesetzt. Dieses Verschneiden kann durch Kombination der Varianten 1 und 2 bzw. 3 und 4. erreicht werden.

Im Folgenden sind Verfahrensabläufe beschrieben, bei denen der Speicherbehälter 3 gefüllt und anschließend zumindest ein Teil des gespeicherten Wassers verwendet wird:
Gemäß einem ersten Verfahrensablauf wird dabei lediglich Frischwasser, d.h. Weichwasser, nicht enthärtetes Leitungswasser oder vorzugsweise verschnittenes Weichwasser, im Speicherbehälter 3 bevorratet.

Der Speicherbehälter 3 wird dabei zu Beginn eines Programmabschnitts Trocknen in einem ersten Programm mit kaltem Wasser (Weichwasser, Frischwasser oder vorzugsweise verschnittenes Weichwasser) gefüllt, wobei der Wassereinlauf über das Regeneriervolumen 22 erfolgt und das Flottenvolumen 21 über den ersten Überlauf 28 befüllt wird, bis das Niveau des zweiten Überlaufs 18 erreicht ist. Der gesamte Speicherbehälter 3 mit Flottenvolumen 21 und Regeneriervolumen 22 dient somit als Kühlkörper der angrenzenden Spülraumseitenwand 27 zur Trocknungsunterstützung. Da die Trocknungsleistung mit kaltem Wasser recht gut ist, kann in diesem Fall auf eine Gebläsetrocknung verzichtet und die elektrische Energie zum Antrieb des Gebläses (nicht dargestellt) eingespart werden. Bei Geräten mit automatischer Türöffnung (EP 1 733 675 A2) wird zur Arbeitsplattenvorwärmung bzw. Arbeitsplattenbelüftung jedoch weiterhin ein Gebläse benötigt, siehe auch DE 10 2007 008 950 A1.

Bei der Ausführung des Programmabschnitts Reinigen im nächsten Programm wird dann das Wasser aus dem Speicherbehälter 3, nämlich aus dem Flottenvolumen 21 in den Sammeltopf 16 abgelassen. Wenn das Flottenvolumen 21 lediglich eine Teilmenge der benötigten Wassermenge fasst, wird der Rest über die Wasserzuleitung direkt eingelassen. Somit steht statt kaltem Wasser aus der Wasserleitung (nach Norm 15°C) wenigstens eine Teilwassermenge zur Verfügung, die mindestens Raumtemperatur (nach Norm 23°C) aufweist. Dadurch erhöht sich die Mischtemperatur des einlaufenden Wassers und es wird weniger Zeit und Energie zum Aufheizen auf ein bestimmtes Temperaturniveau benötigt.

Im Programmabschnitt Reinigen wird das geleerte Flottenvolumen 21 zum Ende der Haltezeit, einer Zeit, in der die gewünschte Spülflüssigkeits-Temperatur erreicht ist, wieder bis zum zweiten Überlauf 18 befüllt und das Wasser erwärmt sich aufgrund der Kontaktfläche des Speicherbehälters 3 zur Spülraumseitenwand 27. Das Temperaturniveau im Spülraum 2 sinkt dadurch minimal ab. Im nächsten Programmschritt Zwischenspülen wird dann das Wasser aus dem Flottenvolumen 21 abgelassen und ggfs. mit kaltem Wasser ergänzt. Es erhöht sich die Mischtemperatur der Spülflüssigkeit. Direkt danach wird das Flottenvolumen 21 des Speicherbehälters 3 wieder bis zum zweiten Überlauf 18 befüllt und das Wasser wärmt sich aufgrund des noch immer höher gelegenen Temperaturniveaus im Spülraum 2 auf. Zu Beginn des anschließenden Programmschrittes Klarspülen wird wiederum das Flottenvolumen 21 entleert und kaltes Wasser ergänzt. Das anschließende Aufheizen der Spülflüssigkeit bis zur gewünschten Temperatur erfordert somit weniger Zeit und Energie. Die letzte Befüllung des Flottenvolumens 21 ist die schon anfangs erwähnte Befüllung im Programmabschnitt Trocknen.

Gemäß einem zweiten Verfahrensablauf wird auch Reinigungsflotte im Speicherbehälter 3 bevorratet.

Dabei wird das Flottenvolumen 21 des Speicherbehälters 3 nach einem Programmabschnitt Klarspülen bzw. zu Beginn des Programmabschnitt Trocknen über die Pumpe 30 mit Reinigungsflotte, d.h. Klarspülflotte gefüllt. Das Flottenvolumen 21 bevorratet einen Teil der Klarspülflotte zur Wiederverwendung im nächsten Spülprogramm. Bei Programmstart des nächsten Spülprogramms, typischerweise im Programmabschnitt Vorspülen, wird die gespeicherte Reinigungsflotte aus dem Flottenvolumen 21 über den Druckstutzen der Pumpe 30 in den Sammeltopf 16 abgelassen. Falls die benötigte Wassermenge größer ist als die abgelassene Reinigungsflottenmenge, wird die restliche Wassermenge über die Wasserzuleitung nachgetankt. Somit steht statt reinem kalten Wasser aus der Wasserleitung (nach Norm 15°C) eine Wassermenge oder zumindest Teilwassermenge mit mindestens Raumtemperatur (nach Norm 23°C) zur Verfügung. Somit ist weniger Energie zum Aufheizen auf ein bestimmtes Temperaturniveau benötigt.

Die zusätzliche Frischwassermenge wird dabei vorzugsweise über den Speicherbehälter 3 eingelassen, da hierdurch der Speicherbehälter 3, insbesondere das Flottenvolumen 21 durchgespült wird und somit Ablagerungen verhindert werden.

Im Programmabschnitt Reinigen wird der Speicherbehälter 3 zum Ende der Haltezeit mit Frischwasser befüllt und das Wasser erwärmt sich aufgrund der Kontaktfläche des Speicherbehälters 3 zur Spülraumseitenwand. Das Temperaturniveau sinkt dadurch minimal im Spülraum 2 ab. Im nächsten Programmschritt Zwischenspülen wird dann das Wasser beim Wassereinlauf wieder abgelassen und erhöht die Mischtemperatur des einlaufenden Wassers. Direkt danach wird der Speicherbehälter 3, d.h. das Flottenvolumen 21 wieder mit Frischwasser befüllt und das Wasser wärmt sich aufgrund des noch immer höher gelegenen Temperaturniveaus im Spülraum 2 auf. Zu Beginn des anschließenden Programmschrittes Klarspülen wird wiederum der Inhalt des Flottenvolumens 21 beim Wassereinlauf abgelassen und erhöht die Mischtemperatur des einlaufenden Wassers. Das anschließende Hochheizen erfordert somit weniger Energie. Die letzte Befüllung ist die schon am Anfang erwähnte Befüllung im Programmabschnitt Trocknen, bei der das Flottenvolumen 21 wiederum über die Pumpe 30 mit Reinigungsflotte, d.h. Klarspülflotte des vorangegangen Programmabschnitts Klarspülen gefüllt wird und diese für ein späteres neues Spülprogramm bevorratet.

Bei beiden genannten Verfahrensabläufen kann bei kurzen Zwischenspülgängen (ca. < 10 min) alternativ auf das Leeren und Befüllen des Flottenvolumens 21 im Programmabschnitt Zwischenspülen verzichtet werden, da die Kontaktzeit und somit der Wärmeübergang hierbei nicht ausreichend sind. Das gespeicherte Wasser aus dem Programmabschnitt Reinigen fließt dann erst zu Beginn des Programmabschnitts Klarspülen ein.

Das Regenerieren des lonenaustauscherharzes erfolgt, wenn es erschöpft ist. Die Erschöpfung kann durch einen Sensor (nicht dargestellt) im Harzbehälter 13 festgestellt oder aus der vom Benutzer eingestellten Härte und der mit dem Flügelradzähler 5 gemessenen Gesamt-Wassermenge errechnet werden. Dann wird die im Regeneriervolumen 22 befindliche Wassermenge über den zweiten Auslass 20 in den Salzbehälter 24 geleitet, der weitere Regeneriervorgang ist weiter oben beschrieben. Nach dem Ablassen kann das Regeneriervolumen 22 insbesondere zur weiteren Unterstützung der Trocknung nachgefüllt werden.

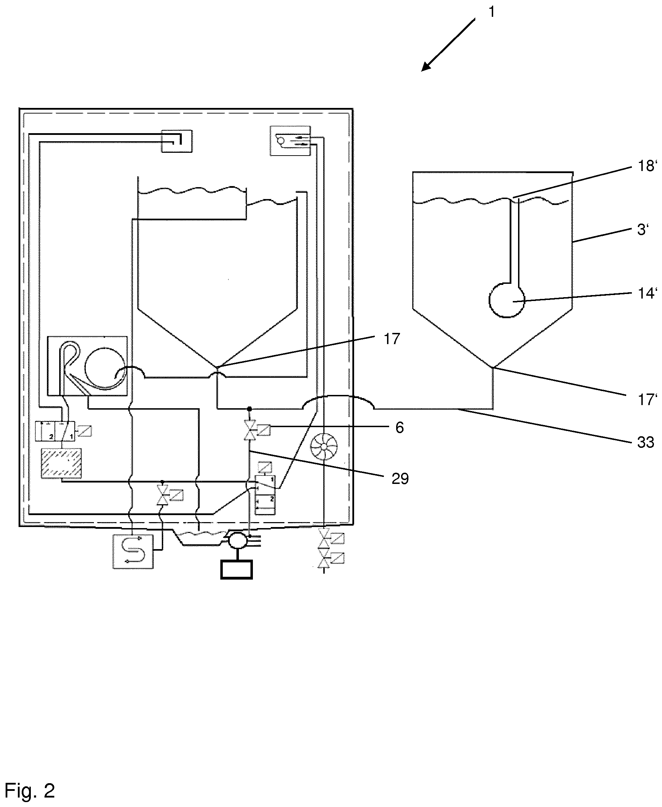

Fig. 2 zeigt ein weiteres Ausführungsbeispiel des erfindungsgemäßen Haushaltgeräts in Gestalt einer Geschirrspülmaschine 1. Zusätzlich zu der in Fig. 1 dargestellten Geschirrspülmaschine 1 weist die in Fig. 2 dargestellte Geschirrspülmaschine 1 einen Zusatzspeicher 3' auf. Dieser weist einen Auslauf 17' auf, über den der Zusatzspeicher 3' entleert werden kann. Der Auslauf 17' ist über eine Verbindungsleitung 33 mit der Entleerungsleitung 29 verbunden. Die Verbindungsleitung 33 mündet in die Entleerungsleitung 29 oberhalb des Speicherablaufventils 6. Der Zusatzspeicher 3' ist somit über die Leitungen 29 und 33 mit dem Speicher 3 fluidtechnisch verbunden. Die beiden Speicher 3,3' bzw. genauer das Flottenvolumen 21 des Speicherbehälters 3 und der Zusatzspeicher 3' bilden dabei kommunizierende Röhren. Der Zusatzspeicher 3' weist einen Überlauf 18' auf. Dieser mündet über eine Leitung in Form einer Schlauchverbindung oder eines Kanals in eine Spülraumbelüftung 14'. Der Speicherbehälter 3 und der Zusatzspeicher 3' sind an den beiden gegenüberliegenden Seitenwänden des Behandlungsraums 2 angeordnet.

Alle übrigen Details der Geschirrspülmaschine 1 aus Fig. 2 entsprechen der in Fig. 1 beschriebenen Geschirrspülmaschine, so dass deren Beschreibung für die Geschirrspülmaschine 1 aus Fig. 2 mitumfasst sein soll.

Insbesondere laufen auch die beschriebenen Verfahrensabläufe für die Geschirrspülmaschine aus Fig. 2 entsprechend ab. Im Falle der Befüllung des Flottenvolumens 21 mit Frischwasser, was wie beschrieben über den Überlauf 28 erfolgt, wird aufgrund der fluidtechnischen Verbindung zum Zusatzspeicher 3' dieser mitbefüllt. Entsprechend wird im Falle der Befüllung des Flottenvolumens 21 mit Reinigungsflotte diese von der Pumpe 30 ebenfalls in den Zusatzspeicher gefördert.

Das erfindungsgemäße Haushaltgerät wurde in Fig. 1 und Fig. 2 am Beispiel einer Geschirrspülmaschine näher beschrieben. Die Erfindung ist jedoch für andere wasserführende Haushaltgeräte, insbesondere Waschmaschinen und Waschtrockner entsprechend einsetzbar.

### Bezugszeichenliste:

1. Spülmaschine
2. Spülraum
3. Speicherbehälter
4. Wassertasche
5. Flügelradzähler
6. Speicherablaufventil
7. EGS-Ventil
8. Wassereinlassventil 2
9. Regenerierventil
10. Wasserschutzeinrichtung 1
11. Wasserschutzeinrichtung 2
12. Wasserschutzeinrichtung 3
13. Harzbehälter
14. Spülraumbelüftung
15. Schlauchverbindung Spülraumbelüftung - Sammeltopf
16. Sammeltopf
17. erster Auslauf des Speicherbehälters
18. zweiter Überlauf
19. Schlauchverbindung zweiter Überlauf - Spülraumbelüftung
20. zweiter Auslauf des Speicherbehälters (Regeneriervolumen)
21. Flottenvolumen
22. Regeneriervolumen
23. Schlauchverbindung zweiter Auslauf - Salzbehälter
24. Salzbehälter
25. Wassereinlaufventil
26. Schlauchverbindung erstes Umschaltventil - Wasserschutzeinrichtung 3
27. Spülraumseitenwand
28. erster Überlauf
29. Entleerungsleitung
30. Umwälzpumpe
31. Steuereinrichtung
32. Regelungseinrichtung

## Patentansprüche

1. Wasserführendes Haushaltgerät, insbesondere Geschirrspülmaschine (1), mit einem Behandlungsraum (2), mit einer Enthärtungseinrichtung für Frischwasser, welcher eine Regeneriereinrichtung mit einem Solevorrat zugeordnet ist, und mit einem Speicherbehälter (3) zur Speicherung von Frischwasser und Reinigungsflotte, wobei der Speicherbehälter (3) wärmeleitend zum Behandlungsraum (2) angeordnet ist und wenigstens ein Flottenvolumen (21) fasst, sowie mit mindestens einem Mittel (29,30) zum Überführen von Reinigungsflotte aus dem Behandlungsraum (2) in das Flottenvolumen (21),
**dadurch gekennzeichnet,**
**dass** der Speicherbehälter (3) zusätzlich ein Regeneriervolumen (22) fasst, welches zur Erzeugung des Solevorrats dient,
und **dass** der Speicherbehälter (3) mindestens ein Begrenzungsmittel (33) zur Trennung des Flottenvolumens (21) vom Regeneriervolumen (22) aufweist, welches einen Übertritt von Flüssigkeit aus dem Flottenvolumen (21) in das Regeneriervolumen (22) verhindert.

2. Wasserführendes Haushaltgerät nach mindestens einem der vorhergehenden Ansprüche,
**dadurch gekennzeichnet,**
**dass** der Speicherbehälter (3) einen dem Regeneriervolumen (22) zugeordneten, insbesondere ersten, Überlauf (28) aufweist, über den Flüssigkeit aus dem Regeneriervolumen (22) in das Flottenvolumen (21) gelangen kann.

3. Wasserführendes Haushaltgerät nach mindestens einem der vorhergehenden Ansprüche,
**dadurch gekennzeichnet,**
**dass** der Speicherbehälter (3) einen dem Flottenvolumen (21) zugeordneten, insbesondere zweiten, Überlauf (18) aufweist, über den Flüssigkeit aus dem Flottenvolumen (21) in den Behandlungsraum (2) gelangen kann.

4. Wasserführendes Haushaltgerät nach den beiden vorhergehenden Ansprüchen,
**dadurch gekennzeichnet,**
**dass** der zweite Überlauf (18) im Speicherbehälter (3) in geringer Höhe angeordnet ist als der erste Überlauf (28).

5. Wasserführendes Haushaltgerät nach einem der vorhergehenden Ansprüche,
**dadurch gekennzeichnet,**
**dass** das Flottenvolumen (22) wenigstens eine Teilmenge der in einem wasserführenden Programmabschnitt benötigten Flüssigkeitsmenge umfasst.

6. Wasserführendes Haushaltgerät nach einem der vorhergehenden Ansprüche,
**dadurch gekennzeichnet,**
**dass** der Speicherbehälter (3) einen, insbesondere ersten, Auslauf (17) besitzt, über den das Flottenvolumen (21) wenigstens annähernd vollständig entleerbar ist.

7. Wasserführendes Haushaltsgerät nach dem vorhergehenden Anspruch,
**dadurch gekennzeichnet,**
**dass** dem ersten Auslauf (17) strömungsmäßig ein Ventil (6) nachgeschaltet ist.

8. Wasserführendes Haushaltsgerät nach einem der beiden vorhergehenden Ansprüche,
**dadurch gekennzeichnet,**
**dass** der erste Auslauf (17) über eine Entleerungsleitung (29) mit einer an den Sammeltopf (16) angeschlossenen Pumpe (30) verbunden ist.

9. Wasserführendes Haushaltsgerät nach einem der vorhergehenden Ansprüche,
**dadurch gekennzeichnet,**
**dass** eine Pumpe (30) vorhanden ist, mit der Reinigungsflotte aus dem Sammeltopf (16), vorzugsweise über die Entleerungsleitung (29), in das Flottenvolumen (21) gefördert werden kann.

10. Wasserführendes Haushaltgerät nach einem der vorhergehenden Ansprüche,
**dadurch gekennzeichnet,**
**dass** der Speicherbehälter (3) einen, insbesondere zweiten, Auslauf (20) besitzt, über den das Regeneriervolumen (22) wenigstens annähernd vollständig entleerbar ist.

11. Wasserführendes Haushaltgerät nach einem der vorhergehenden Ansprüche,
**dadurch gekennzeichnet,**
**dass** der Speicherbehälter (3) sowohl mit über die Enthärtungseinrichtung geleitetem Weichwasser als auch mit Frischwasser aus einem Wasseranschluss füllbar ist.

12. Wasserführendes Haushaltgerät nach einem der vorhergehenden Ansprüche,
**dadurch gekennzeichnet,**
**dass** ein Zusatzspeicher (3') zur Speicherung von Frischwasser und Reinigungsflotte vorhanden ist, der mit dem Flottenvolumen (21) fluidtechnisch in Verbindung steht.

13. Wasserführendes Haushaltgerät nach dem vorhergehenden Anspruch,
**dadurch gekennzeichnet,**
**dass** der Zusatzspeicher und das Flottenvolumen nach dem Prinzip kommunizierender Röhren miteinander in Verbindung stehen.

14. Wasserführendes Haushaltgerät nach einem der vorhergehenden Ansprüche,
**dadurch gekennzeichnet,**
**dass** eine zur Umwälzung von Spülflüssigkeit vorgesehene Umwälzpumpe (30) während der Entleerung des Speicherbehälters (3) mit einer ansteigenden Drehzahl betrieben wird.

## Claims

1. Water-conducting domestic appliance, in particular a dishwasher (1), comprising a treatment chamber (2), comprising a softening means for fresh water, which means is associated with a regeneration means that has a brine reservoir, and comprising a storage container (3) for storing fresh water and cleaning liquor, the storage container (3) being arranged thermally conductively with respect to the treatment chamber (2) and containing at least one liquor volume (21), and comprising at least one means (29, 30) for transferring cleaning liquor out of the treatment chamber (2) into the liquor volume (21), **characterised in that** the storage container (3) additionally contains a regeneration volume (22) which is used to produce the brine reservoir, and **in that** the storage container (3) has at least one delimitation means (33) for separating the liquor volume (21) from the regeneration volume (22), which means prevents liquid being transferred out of the liquor volume (21) and into the regeneration volume (22).

2. Water-conducting domestic appliance according to at least one of the preceding claims, **characterised in that** the storage container (3) has an in particular first overflow (28) which is associated with the regeneration volume (22) and by means of which the liquid can reach the liquor volume (21) from the regeneration volume (22).

3. Water-conducting domestic appliance according to at least one of the preceding claims, **characterised in that** the storage container (3) has an in particular second overflow (18) which is associated with the liquor volume (21) and by means of which the liquid can reach the treatment chamber (2) from the liquor volume (21).

4. Water-conducting domestic appliance according to the previous two claims, **characterised in that** the second overflow (18) in the storage container (3) is arranged at a lower height than the first overflow (28).

5. Water-conveying domestic appliance according to any of the preceding claims, **characterised in that** the liquor volume (22) comprises at least one partial amount of the liquid amount required in a water-conducting program portion.

6. Water-conducting domestic appliance according to any of the preceding claims, **characterised in that** the storage container (3) has an in particular first outlet (17) by means of which the liquor volume (21) can be at least almost completely discharged.

7. Water-conducting domestic appliance according to the preceding claim, **characterized in that** a valve (6) is connected downstream of the first outlet (17) in terms of flow.

8. Water-conducting domestic appliance according to either of the two preceding claims, **characterised in that** the first outlet (17) is connected by means of a discharge line (29) to a pump (30) connected to the collection vessel (16).

9. Water-conducting domestic appliance according to any of the preceding claims, **characterised in that** a pump (30) is present, by means of which the cleaning liquor can be conveyed out of the collection vessel (16) into the liquor volume (21), preferably by means of the discharge line (29).

10. Water-conducting domestic appliance according any of the preceding claims, **characterised in that** the storage container (3) has an in particular second outlet (20) by means of which the regeneration volume (22) can be at least almost completely discharged.

11. Water-conducting domestic appliance according to any of the preceding claims, **characterised in that** the storage container (3) can be filled both with soft water supplied by means of the softening means and with fresh water from a water supply.

12. Water-conducting domestic appliance according to any of the preceding claims, **characterised in that** an additional storage means (3') for storing fresh water and cleaning liquor is present and is fluidically connected to the liquor volume (21).

13. Water-conducting domestic appliance according to the preceding claim, **characterised in that** the additional storage means and the liquor volume are interconnected according to the principle of communicating vessels.

14. Water-conducting domestic appliance according to any of the preceding claims, **characterised in that** a circulating pump (30) provided for circulating washing liquid is operated at an increasing rotational speed while the storage container (3) is emptied.

## Revendications

1. Appareil ménager à circulation d'eau, en particulier lave-vaisselle (1), comportant un compartiment de traitement (2), un adoucisseur d'eau douce auquel est associé un régénérateur avec réserve d'eau saline, et un réservoir de stockage (3) permettant de stocker de l'eau douce et une solution de nettoyage, le réservoir de stockage (3) étant agencé de manière thermo-conductrice par rapport au compartiment de traitement (2) et comprenant au moins un volume de solution (21), ainsi qu'au moins un moyen (29, 30) permettant de transférer la solution de nettoyage du compartiment de traitement (2) au volume de solution (21),
**caractérisé en ce que**
le réservoir de stockage (3) comprend en outre un volume de régénérant (22) servant à générer la réserve d'eau saline et **en ce que** le réservoir de stockage (3) comporte au moins un moyen de délimitation (33) permettant de séparer le volume de solution (21) du volume de régénérant (22), empêchant ainsi la pénétration de liquide du volume de solution (21) dans le volume de régénérant (22).

2. Appareil ménager à circulation d'eau selon l'une au moins des revendications précédentes, **caractérisé en ce que** le réservoir de stockage (3) comporte un trop-plein (28), en particulier un premier trop-plein (28), associé au volume de régénérant (22), par lequel du liquide provenant du volume de régénérant (22) peut pénétrer dans le volume de solution (21).

3. Appareil ménager à circulation d'eau selon l'une au moins des revendications précédentes, **caractérisé en ce que** le réservoir de stockage (3) comporte un trop-plein (18), en particulier un second trop-plein (18), associé au volume de solution (21), par lequel du liquide provenant du volume de solution (21) peut pénétrer dans le compartiment de traitement (2).

4. Appareil ménager à circulation d'eau selon les deux revendications précédentes, **caractérisé en ce que** le second trop-plein (18) est agencé dans le réservoir de stockage (3) à un niveau inférieur au premier trop-plein (28).

5. Appareil ménager à circulation d'eau selon l'une des revendications précédentes, **caractérisé en ce que** le volume de solution (22) comprend au moins une fraction de la quantité de liquide utilisée dans une partie de programme à circulation d'eau.

6. Appareil ménager à circulation d'eau selon l'une des revendications précédentes, **caractérisé en ce que** le réservoir de stockage (3) comporte une sortie d'écoulement (17), en particulier une première sortie d'écoulement (17), par laquelle le volume de solution (21) peut être vidé au moins en quasi-totalité.

7. Appareil ménager à circulation d'eau selon la revendication précédente, **caractérisé en ce qu'**une vanne (6) est montée fluidiquement en aval de la première sortie d'écoulement (17).

8. Appareil ménager à circulation d'eau selon l'une des deux revendications précédentes, **caractérisé en ce que** la première sortie d'écoulement (17) est reliée, via une conduite de vidange (29), à une pompe (30) raccordée au bac collecteur (16).

9. Appareil ménager à circulation d'eau selon l'une des revendications précédentes, **caractérisé en ce qu'**une pompe (30) est présente, au moyen de laquelle une solution de nettoyage peut être acheminée du bac collecteur (16) jusque dans le volume de solution (21), de préférence via la conduite de vidange (29).

10. Appareil ménager à circulation d'eau selon l'une des revendications précédentes, **caractérisé en ce que** le réservoir de stockage (3) comporte une sortie d'écoulement (20), en particulier une seconde sortie d'écoulement (20), par laquelle le volume de régénérant (22) peut être vidé au moins en quasi-totalité.

11. Appareil ménager à circulation d'eau selon l'une des revendications précédentes, **caractérisé en ce que** le réservoir de stockage (3) peut être rempli aussi bien avec l'eau adoucie acheminée via l'adoucisseur qu'avec de l'eau douce provenant du r raccord d'eau.

12. Appareil ménager à circulation d'eau selon l'une des revendications précédentes, **caractérisé en ce qu'**un dispositif de stockage auxiliaire (3') permettant de stocker de l'eau douce et de la solution de nettoyage est présent, qui est en communication fluidique avec le volume de solution (21).

13. Appareil ménager à circulation d'eau selon la revendication précédente, **caractérisé en ce que** le dispositif de stockage auxiliaire et le volume de solution communiquent entre eux selon le principe des vases communicants.

14. Appareil ménager à circulation d'eau selon l'une des revendications précédentes, **caractérisé en ce qu'**une pompe de recirculation (30) prévue pour faire recirculer du liquide de rinçage est utilisée à une vitesse croissante pendant la vidange du réservoir de stockage (3).
